# DEMANDE DE BREVET EUROPEEN

(11) **EP 2 391 107 A1**
(43) Date de publication de la demande: **30.11.2011**
(21) Numéro de dépôt: 11167490.9
(22) Date de dépôt: 25.05.2011
(51) Int. Cl.: H04M 3/54

(54) **Procédé de reconfiguration automatique d'un service de renvoi de communications**

(30) Priorité: 25.05.2010 FR 1054048
(71) Demandeur: France Telecom, 75015 Paris (FR)
(72) Inventeur: Besombe, Philippe, LOUANNEC, 22700 (FR); Toutain, François, LOUANNEC, 22700 (FR)
(74) Mandataire: Saint-Marc-Etienne, Christophe Andréas

(57) **Abrégé**

La présente invention concerne un procédé comprenant une étape d'annulation d'une commande de renvoi de communications RRq(Te).

Selon l'invention, ladite étape d'annulation étant destinée à être exécutée après détection d'un changement d'état d'un dispositif (TV) prédéterminé.

L'invention permet par exemple à un utilisateur qui aura requis un renvoi d'appel pour pouvoir utiliser en toute tranquillité un dispositif de télévision (TV), de recevoir à nouveau des appels dès qu'il aura été détecté que ce dispositif (TV) a été éteint ou mis en mode veille.

## Description

### 1. Domaine de l'invention

L'invention concerne un procédé de communication comprenant une étape d'annulation d'une commande de renvoi de communications.

De tels procédés sont couramment utilisés dans le domaine des télécommunications, en particulier dans des applications de téléphonie. De nombreux opérateurs de télécommunications proposent en effet des services de renvoi d'appel permettant à un utilisateur de se déclarer indisponible et de faire renvoyer toute requête d'établissement d'appel vers une messagerie.

### 2. Art antérieur

Dans l'état actuel de la technique, un service de renvoi de communications entrantes, par exemple des appels téléphoniques, est activé par l'utilisateur au moyen d'une interface de commande qui aura été mise à disposition de l'utilisateur sur un équipement tel un téléphone, un ordinateur personnel ou encore éventuellement un dispositif de télévision relié à un réseau de communication *via* un dispositif formant passerelle entre le dispositif de télévision et le réseau. Une fois activé par l'utilisateur, le service de renvoi d'appel reste activé jusqu'à nouvel ordre ou pendant une durée déterminée par l'utilisateur. En tout état de cause, si cet utilisateur souhaite neutraliser le service de renvoi d'appel avant expiration de la durée qu'il a déterminée, il doit accéder à nouveau à l'interface de commande, ce qui n'est pas toujours aisé, en particulier si l'interface de commande n'est accessible qu'au moyen d'un équipement qui a été éteint entre-temps et qu'il va donc falloir rallumer. Un tel désagrément est néfaste pour le confort d'usage du service de renvoi d'appel et risque donc d'en contrarier l'usage.

Ainsi, un utilisateur pourra avoir configuré un service de renvoi d'appel de manière à ce que tout appel soit renvoyé vers la messagerie pendant une durée correspondant à un programme audiovisuel qu'il se propose de suivre, et renoncer ensuite à suivre ce programme jusqu'à son terme, se rendant en théorie à nouveau disponible pour des appels entrants. Dans une telle hypothèse, l'utilisateur devra en premier lieu penser à annuler le renvoi, accéder ensuite physiquement à l'interface de commande du service de renvoi, et enfin procéder manuellement à cette opération.

### 3. Objectifs de l'invention

L'invention apporte une solution qui ne présente pas les inconvénients décrits plus haut, en proposant un procédé rendant possible une neutralisation d'un service de renvoi de communications sans intervention de l'utilisateur.

### 4. Exposé de l'invention

En effet, selon un aspect fonctionnel, l'invention concerne un procédé conforme au paragraphe introductif dans lequel l'étape d'annulation est destinée à être exécutée après détection d'un changement d'état d'un dispositif prédéterminé.

L'invention permet par exemple à un utilisateur qui aura requis un renvoi d'appel pour pouvoir utiliser en toute tranquillité un dispositif tel un dispositif de télévision ou un ordinateur personnel, de recevoir à nouveau des appels dès qu'il aura été détecté que ce dispositif a été éteint ou mis en mode veille, comme cela sera en principe le cas si l'utilisateur renonce à suivre dans sa totalité le programme qu'il avait initialement choisi.

Selon une première variante de l'invention, l'étape d'annulation n'est exécutée qu'après qu'une durée prédéterminée se soit écoulée sans nouveau changement d'état du dispositif prédéterminé.

Une telle variante permet d'éviter qu'un renvoi de communications se trouve annulé de façon intempestive si par exemple l'utilisateur éteint par mégarde le dispositif prédéterminé et le rallume tout de suite après pour y suivre le programme qu'il a choisi.

Selon une autre variante de l'invention, la commande de renvoi de communications a été préalablement émise au moyen dudit dispositif prédéterminé.

La mise en oeuvre de l'invention est particulièrement avantageuse dans cette variante, où le dispositif dont le changement d'état doit être détecté doit être en fonctionnement pour qu'un accès à l'interface de commande du service de renvoi soit possible. Ainsi, si l'utilisateur oublie d'ordonner manuellement *via* cette interface une annulation du renvoi avant extinction du dispositif, il n'aura pas besoin de rallumer celui-ci pour réparer son oubli puisque l'extinction, une fois détectée, aura automatiquement provoqué l'annulation du renvoi d'appel.

Un tel dispositif pourra avantageusement être un dispositif de télévision relié à un boîtier décodeur, lequel boîtier pouvant être relié à ou intégré dans une passerelle domestique faisant interface avec un réseau de communication en vue de relier le dispositif de télévision à un service de distribution de contenus audiovisuels. Dans un tel cas, la formation de la requête de renvoi pourra être facilitée par une coopération avec un guide électronique de programmes installé dan le boîtier-décodeur. Si par exemple la requête de renvoi doit stipuler une heure de fin de renvoi, cette heure de fin de renvoi pourra être automatiquement extraite d'un guide électronique de programmes destiné à produire entre autres renseignements les heures de début et de fin de chaque programme.

Selon un mode de mise en oeuvre avantageux du fait de sa simplicité, l'étape de détection est réalisée en détectant un changement d'état électrique d'une broche présente sur un connecteur dont est muni ledit dispositif. Si, par exemple, le dispositif dont le changement d'état doit être détecté est un écran relié à un boîtier décodeur par un câble de type DVI ou HDMI, une surveillance du potentiel d'une broche dite HPD (abréviation de l'expression anglaise « Hot Plug Detect » bien connue de l'homme du métier) incluse dans un connecteur dudit câble permettra d'en détecter le passage à un potentiel nul indiquant une mise en veille ou une mise hors tension de l'écran, événement qui provoquera l'émission par le boîtier-décodeur d'une requête d'annulation du renvoi d'appel.

Selon un aspect matériel, l'invention concerne donc également un équipement de communication, par exemple un boîtier décodeur, comprenant des moyens d'émission d'une requête d'annulation d'une commande de renvoi d'appel préalablement émise par un utilisateur, lesdits moyens d'émission étant destinés à être activés après détection d'un changement d'état d'un dispositif prédéterminé, par exemple un dispositif de télévision.

Selon un autre aspect matériel, l'invention concerne un système de télécommunication incluant :
- un équipement de communication relié à au moins un dispositif apte à restituer des stimuli à un utilisateur,
- un serveur de gestion d'applications de communication relié audit équipement *via* un réseau de communication,
   caractérisé en ce qu'il comprend des moyens d'émission, à destination du serveur de gestion d'applications de communication, d'une requête d'annulation d'une commande de renvoi de communcations, lesdits moyens d'émission étant destinés à être activés après détection d'un changement d'état dudit dispositif.

Selon encore un autre aspect matériel, l'invention concerne également, en tant que moyen utile à sa mise en oeuvre, un programme d'ordinateur caractérisé en ce qu'il comprend des instructions de code de programme pour la mise en oeuvre du procédé tel que décrit plus haut lorsque ce programme est exécuté par un processeur.

### 5. Liste des figures

D'autres caractéristiques et avantages de l'invention apparaîtront plus clairement à la lecture de la description suivante d'un mode de réalisation particulier, donné à titre de simple exemple illustratif et non-limitatif, et des dessins annexés, parmi lesquels :
- la figure 1 est un diagramme fonctionnel qui représente un système de communication dans lequel l'invention est mise en oeuvre ; et
- la figure 2 est un diagramme fonctionnel qui illustre un mode de mise en oeuvre particulièrement avantageux de l'invention.

### 6. Description d'un mode de réalisation de l'invention

### 6.1 Principe général

Le principe général de l'invention repose sur une annulation automatique d'une commande de renvoi d'appel, déclenchée après détection d'un changement d'état d'un dispositif prédéterminé, qui pourra avoir été identifié comme tel par l'utilisateur ou être identifié comme tel pour avoir été à l'origine de l'émission de la commande de renvoi.

### 6.2 Description d'un mode de réalisation

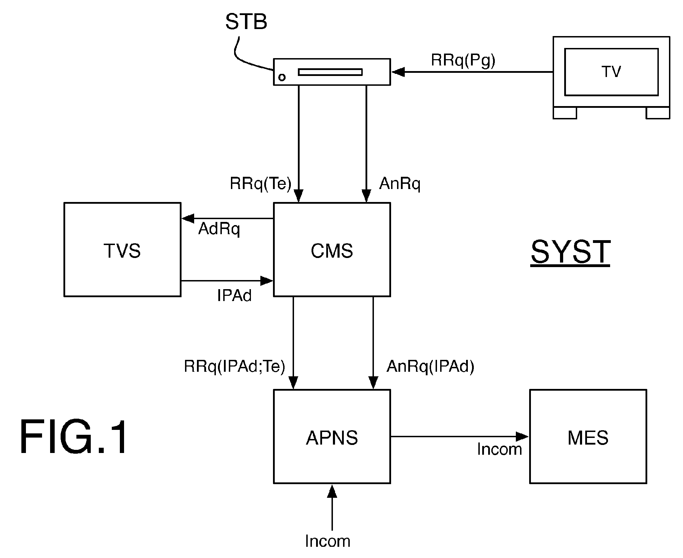

La **FIG.1** illustre un premier mode de mise en oeuvre de l'invention au sein d'un système de télécommunication SYST incluant :
- un équipement de communication STB, ici un boîtier-décodeur de signaux de télévision numériques, relié à au moins un dispositif apte à restituer des stimuli à un utilisateur, ici un dispositif de télévision TV, et
- un serveur de gestion d'applications de communication APNS relié audit équipement STB *via* un réseau de communication.

Ce système SYST comprend des moyens d'émission, à destination du serveur de gestion d'applications de communication APNS, d'une requête d'annulation AnRq d'une commande de renvoi d'appel RRq(Te) préalablement émise. Conformément à l'invention, les moyens d'émission qui sont ici inclus dans l'équipement de communication STB sont destinés à être activés après détection d'un changement d'état dudit dispositif de télévision TV.

Dans l'exemple de réalisation décrit ici, une interface de commande d'un service de renvoi de communications est mis à disposition de l'utilisateur du dispositif de télévision TV. Un telle interface comportera de préférence une composante graphique apte à être affichée par le dispositif de télévision, par exemple des pages interactives de type « http » ou « html » fournies par un serveur de gestion d'appels CMS, une navigation dans cette interface graphique étant rendue possible par manipulation d'une télécommande du dispositif de télévision TV.

Au cours d'une première phase, l'utilisateur du dispositif de télévision TV ordonne au moyen d'une interface de commande l'émission d'une requête de renvoi d'appel RRq(Pg), ladite requête étant liée dans le présent exemple à un programme audiovisuel Pg que l'utilisateur projette de suivre. Cette requête de renvoi d'appel RRq(Pg) est reçue par l'équipement STB qui, à partir d'un identifiant du programme Pg, déduit une heure Te d'expiration du renvoi d'appel. L'équipement STB transfère ensuite vers le serveur de gestion d'appels CMS une requête de renvoi modifiée RRq(Te) dans laquelle l'heure d'expiration Te aura été insérée. Après réception de cette requête RRq(Te), le serveur de gestion d'appels CMS interroge au moyen d'une requête d'adresse AdRq un serveur de distribution de contenus audiovisuels TVS auquel l'utilisateur est abonné en vue d'en connaître l'adresse IP (abréviation de l'expression anglaise « Internet Protocol »). En effet, dans l'application décrite ici, les communications destinées à être renvoyées sont des communication téléphoniques de type VoIP (abréviation de l'expression anglaise « Voice over IP»), c'est à dire qu'elles sont véhiculées sous forme de paquets de données numériques *via* un ou plusieurs réseaux conformes au protocole Internet. Après avoir reçu l'adresse IPAd de l'utilisateur, le serveur de gestion d'appels CMS transfère vers le serveur de gestion d'applications de communication APNS une requête de renvoi complétée RRq(IPAd;Te) incluant à la fois l'adresse IPAd de l'utilisateur et l'heure d'expiration Te. Une fois en possession des informations incluses dans cette requête complétée, le serveur de gestion d'applications de communication APNS aiguillera vers un service de messagerie MES toute communication entrante Incom destinée à l'utilisateur identifié par l'adresse IPAd, et ce jusqu'à ce que l'heure d'expiration Te soit atteinte.

Dans le mode de mise en oeuvre mise en oeuvre représenté ici, l'équipement de communication STB est muni de moyens pour détecter un changement d'état du dispositif de télévision TV. En cas de mise en veille ou de mise hors tension du dispositif de télévision TV, l'équipement STB émet vers le serveur de gestion d'appels CMS une requête d'annulation AnRq de la commande de renvoi d'appel qui a été émise dans les conditions décrites plus haut.

L'invention permet ainsi d'éviter à un utilisateur qui aura oublié d'ordonner manuellement une annulation du renvoi d'appel avant extinction du dispositif de télévision TV d'avoir à rallumer celui-ci pour réparer son oubli puisque l'extinction, une fois détectée, provoquera automatiquement l'annulation du renvoi d'appel.

Outre l'amélioration du confort d'usage qu'elle procure à l'utilisateur, la mise en oeuvre de l'invention est également avantageuse pour l'opérateur de télécommunications qui fournit le service de renvoi, puisque l'automaticité de l'annulation du renvoi obtenue grâce à l'invention permet de purger rapidement le système de toute instruction de renvoi qui serait devenue caduque.

Pour éviter l'émission de requêtes de renvoi superflues, l'équipement STB pourra avantageusement tenir à jour une table recensant les requêtes de renvoi d'appel qu'elle aura émises, les moyens d'émission de la requête d'annulation inclus dans l'équipement STB ne devant être activés après détection d'un changement d'état du dispositif de télévision TV qu'à condition qu'une commande de renvoi d'appel ait bien été préalablement émise par l'équipement STB.

En outre, l'équipement STB pourra avantageusement être muni de moyens de temporisation permettant de faire en sorte que la requête d'annulation ne soit émise qu'après qu'une durée prédéterminée ce soit écoulée sans nouveau changement d'état du dispositif de télévision TV.

Dans le mode de mise en oeuvre de l'invention représenté ici, le dispositif de télévision TV est le dispositif qui est à l'origine de l'émission de la commande initiale de renvoi RRq(Pg), et c'est à ce titre qu'un changement de l'état de ce dispositif TV constitue l'événement déclencheur de l'émission de la requête d'annulation AnRq. Dans d'autres modes de mise en oeuvre non représentés ici, il est parfaitement envisageable que la commande initiale de renvoi soit émise par un autre dispositif que le dispositif de télévision TV, par exemple un ordinateur personnel, et que le libellé de cette commande de renvoi y établisse un lien avec le dispositif de télévision TV, identifiant ainsi ce dernier en tant que dispositif prédéterminé dont il faut surveiller l'état.

### 6.3 Description d'une variante de réalisation

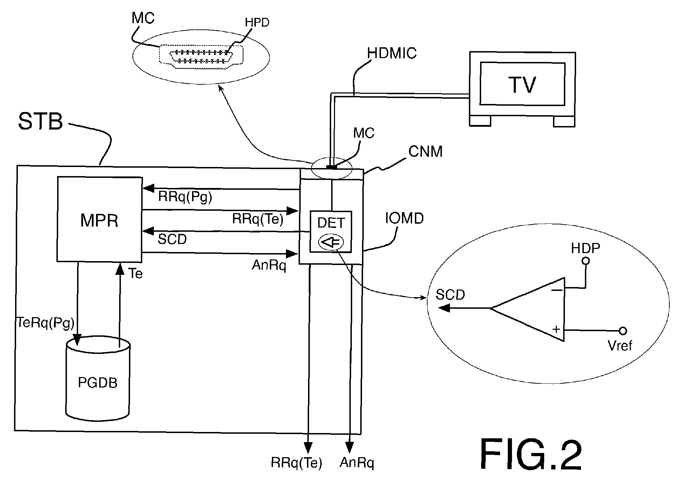

La **FIG.2** permet de mieux comprendre le fonctionnement de l'équipement STB, qui inclut un processeur MPR dans lequel ont été chargées des instructions de code de programme pour qu'il puisse opérer comme suit : lorsqu'une requête de renvoi d'appel RRq(Pg) est reçue par l'équipement STB depuis le dispositif de télévision TV via un module d'entrée/sortie IOMD, cette requête est transmise au processeur MPR qui interroge alors au moyen d'une requête TeRq(Pg) une base de données de programmes PGDB aux fins d'en obtenir l'heure Te à laquelle se termine le programme Pg sélectionné par l'utilisateur. Le processeur MPR génère ensuite une requête de renvoi modifiée RRq(Te) dans laquelle l'heure d'expiration Te aura été insérée et la transmet au module d'entrée/sortie IOMD afin que cette requête modifiée RRq(Te) soit transmise par l'équipement STB vers un serveur de gestion d'appels.

La présente figure illustre un mode de mise en oeuvre particulièrement avantageux de l'invention, dans lequel la détection du changement d'état du dispositif de télévision TV est réalisée par surveillance de l'état d'une connexion électrique entre ce dispositif de télévision TV et l'équipement STB.

A cet effet, l'équipement STB inclut des moyens de détection DET d'un changement d'état électrique d'une broche HPD présente sur un connecteur MC d'un câble HDMIC reliant le dispositif de télévision TV à l'équipement STB et enfiché dans des moyens de connexion CNM propres à l'équipement STB. Cette broche HPD pourra par exemple être matérialisée par une broche numérotée 19 dans un connecteur de type HDMI (pour « High Definition Multimedia Interface»), une broche numérotée 16 dans un connecteur de type DVI (pour « Digital Visual Interface»), ou encore une broche numérotée 18 dans un connecteur de type DFP (pour « Digital Flat Panel »).

Les moyens de détection DET pourront par exemple inclure un comparateur CMP destiné à générer un signal de détection SCD en fonction du résultat d'une comparaison entre un potentiel de référence Vref choisi non nul mais proche de zéro (par exemple 0,2V) et le potentiel de la broche HPD. Lorsque le potentiel de référence Vref deviendra supérieur au potentiel de la broche HPD, les moyens de détection provoqueront l'apparition, dans le signal de détection SCD, d'un front montant avertissant ainsi le microprocesseur MPR que le dispositif de télévision TV a été éteint ou placé en mode veille. Le processeur MPR génèrera alors un signal de requête d'annulation AnRq de la commande de renvoi d'appel qui a été émise dans les conditions décrites plus haut, et transmettra cette requête AnRq au module d'entrée/sortie IOMD afin qu'elle soit envoyée au serveur de gestion d'appels.

Les moyens de détection DET pourront en variante inclure des moyens de temporisation permettant de faire en sorte que le changement d'état du signal de détection SCD ne se produise qu'après qu'une durée prédéterminée ce soit écoulée sans nouveau changement d'état du dispositif de télévision TV. Une telle variante permet d'éviter qu'un renvoi de communications se trouve annulé de façon intempestive si par exemple l'utilisateur éteint par mégarde le dispositif de télévision TV et le rallume tout de suite après pour y suivre le programme qu'il a choisi.

## Revendications

1. Procédé de communication comprenant une étape d'annulation d'une commande de renvoi de communications, ladite étape d'annulation étant exécutée après détection d'un changement d'état d'un dispositif prédéterminé.

2. Procédé selon la revendication 1, **caractérisé en ce que** l'étape d'annulation n'est exécutée qu'après qu'une durée prédéterminée se soit écoulée sans nouveau changement d'état du dispositif prédéterminé.

3. Procédé selon la revendication 1, **caractérisé en ce que** la commande de renvoi de communications a été préalablement émise au moyen dudit dispositif prédéterminé.

4. Procédé selon la revendication 1, **caractérisé en ce que** l'étape de détection est réalisée en détectant un changement d'état électrique d'une broche présente sur un connecteur dont est muni ledit dispositif.

5. Equipement de communication comprenant des moyens d'émission d'une requête d'annulation d'une commande de renvoi de communications, lesdits moyens d'émission étant destinés à être activés après détection d'un changement d'état d'un dispositif prédéterminé.

6. Système de télécommunication incluant :
. un équipement de communication relié à au moins un dispositif apte à restituer des stimuli à un utilisateur,
. un serveur de gestion d'applications de communication relié audit équipement *via* un réseau de communication,
**caractérisé en ce qu'**il comprend des moyens d'émission, à destination du serveur de gestion d'applications de communication, d'une requête d'annulation d'une commande de renvoi de communications, lesdits moyens d'émission étant destinés à être activés après détection d'un changement d'état dudit dispositif.

7. Programme d'ordinateur **caractérisé en ce qu'**il comprend des instructions de code de programme pour la mise en oeuvre du procédé selon l'une quelconque des revendications 1 à 4 lorsque ce programme est exécuté par un processeur.
